# EUROPEAN PATENT APPLICATION

(11) **EP 3 012 711 A1**
(43) Date of publication of application: **27.04.2016**
(21) Application number: 14306678.5
(22) Date of filing: 22.10.2014
(51) Int. Cl.: G06F 1/32, G06F 1/30

(54) **Method of and apparatus adapted for controlling a power consumption of a media stream reproducing device**

(71) Applicant: Laboratories Thomson Ltd., 8048 Zürich (CH)
(72) Inventor: Keller, Anton Werner, 8905 Arni (CH)
(74) Representative: Lindemann, Robert

(57) **Abstract**

A method of controlling a power consumption of a media stream reproducing device having a wide input voltage range power supply includes receiving a media stream and providing an output signal representative of the received media stream. A mains supply voltage of the media stream receiver is monitored and, in case the measured mains supply voltage falls below a predetermined first level the method further includes one or more of providing an output signal representative of a message indicating the reduced mains supply voltage and advising a user to reduce the power consumption of at least the media stream reproducing device, or providing an output signal controlling a first reduction of the power consumption of the media stream reproducing device, or controlling a recording device operatively connected to the media stream reproducing device to record the received media stream for later reproduction.

## Description

### Field

The invention pertains to controlling a power consumption of a media stream reproducing device, in particular to controlling the power consumption in dependence of a mains supply voltage level.

### Background

A general mains power supply grid typically operates at a nominal AC voltage, e.g. 100 VAC, 110 VAC or 230 VAC, with a typical tolerance of +/- 5% or +/- 10%. In rare cases a DC mains supply voltage is used. The mains power supply grid distributes and provides the power into facilities and houses, where electrical appliances are connected to mains power outlets and draw their respective nominal power at a corresponding nominal supply voltage.

In many of the electrical appliances the power drawn from the mains power supply grid depends more or less linearly from the actual supply voltage present at the power outlet. For example, an electrical heater can be represented in a simplified manner by a resistor that turns electrical energy into heat. The power P drawn by a resistor having a fixed resistance R is determined in accordance with Ohm's law: P=U²/R, with U being the effective voltage. Clearly, the power drawn strongly depends from the voltage across the resistor. While the resistor is the ideal case for showing this effect it essentially holds true for many inductive and capacitive loads.

When the generators powering the mains power supply grid hit their maximum power generation capacity while the power consumption still increases the voltage across the grid will eventually drop below the nominal value and tolerance. The same can happen in case it is tried to feed more than a maximum rated current over a power supply line, which inevitably has a finite non-zero resistance and inductance.

Some power grid operators, whenever the power consumption approaches or reaches the maximum power generation capacity of the generators powering the mains power supply grid or the maximum power distribution capacity of the grid, reduce the mains supply voltage in order to reduce the total power consumption in accordance with Ohm's law as explained above. Sometimes the mains supply voltage is reduced even below the tolerance.

Devices having wide input voltage range power supplies will, within a certain specified input voltage range, draw substantially the same power from a mains power line irrespective of the actual input voltage. The specified input voltage range may exceed the nominal voltage and the tolerances of a power supply grid by a large amount, e.g. range from 100 VAC to 240 VAC. This may contravene the object of reducing the voltage on a mains power supply grid.

There is thus a need to control electrical appliances having wide input voltage range power supplies in a manner that adopts the initial object of grid-provider controlled brownout.

### Summary

A method of controlling a power consumption of a media stream reproducing device having a wide input voltage range power supply includes receiving a media stream and providing an output signal representative of the received media stream.

The wide input voltage range power supply effectively removes or reduces a variation of a power consumption in dependence of a variation of the input supply voltage.

In the context of the present method and its embodiments and developments the media stream includes, inter alia, audio and/or video content, such as movies, TV shows, radio programs and the like. The media stream can be received over one or more of analog or digital terrestrial, cable or satellite radio or TV broadcast, or a digital broadband signal in accordance with one or more of xDSL, DOCSIS, GSM, UMTS, LTE, wireless LAN, Bluetooth, WIMAX and the like. The media stream reproducing device includes corresponding receivers, which are generally known and are not described in detail in this specification.

The media stream reproducing device includes, e.g., an audio amplifier and loudspeakers, a display device or a television set that receive, inter alia, a signal representing audio and/or video content and outputting the content in a form perceptible by a human user.

The media stream is received by the media stream reproducing device or by a dedicated receiver. In the former case the output signal representative of the received media stream is an audible and/or visible output corresponding to the content of the media stream. In the latter case the output signal representative of the received media stream is an electrical, electro-magnetic, or optical signal carrying the content but not in a form that can be perceived by a human, which signal is fed to the media stream reproducing device that ultimately outputs visible and/or audible content to a human viewer or listener. The electrical or optical signal includes, but is not limited to, analog or digital signals in accordance with one or more of CVBS, RGB, HDMI, DisplayPort, Miracast, MirrorLink, AirPlay, or DLNA.

The method further includes monitoring a mains supply voltage of the media stream receiver. In accordance with the method, in case the measured mains supply voltage falls below a predetermined first level the method further includes one or more of providing an output signal representative of a message indicating the reduced mains supply voltage and advising a user to reduce the power consumption of at least the media stream reproducing device, or providing an output signal controlling a first reduction of the power consumption of the media stream reproducing device, or controlling a recording device operatively connected to the media stream reproducing device to record the received media stream for later reproduction.

In case an output signal representative of a message indicating the reduced mains supply voltage and advising a user to reduce the power consumption of at least the media stream reproducing device is provided, the message is ultimately reproduced in a form perceptible by a human user, e.g. a text message visible on a display or a voice message. The user can then reduce the power consumption by reducing the brightness and/or volume of the media stream reproducing device, and in addition reduce the power consumption of other electrical appliances by taking suitable action. In this context it is also conceivable to inform the user about the brownout by sending a message over a separate communication channel, e.g. using email or text messages, i.e. SMS, to a computer, tablet or cellphone. The user could then reduce the power consumption by directly or remotely controlling the media stream reproduction device to enter a lower power mode, or switching it off or to standby. It is obvious that a user could in this case also directly or remotely control other electric appliances to save energy.

In case an output signal controlling a first reduction of the power consumption of the media stream reproducing device is provided, such output signal directly controls reduce the power consumption by reducing the brightness and/or volume of the media stream reproducing device. This case applies, for example, to a setting where the media stream is received by a receiver that is connected to the media stream reproducing device. Direct control is possible for example using control commands in accordance with HDMI CEC, or using a separate control connection, e.g. an infrared transmitter programmed to transmit commands for controlling the power consumption of the media stream reproducing device. CEC is an acronym for Consumer Electronics Control, which is a part of the HDMI standard. CEC includes a command "STANDBY" for setting other connected devices in standby mode, all together or one by one. Other ways of controlling are also conceivable, e.g. over a wireless LAN using a suitable control connection or over a Bluetooth connection using the AVRCP profile, or even a DC switching signal provided at a dedicated port, and the like.

In case a recording device operatively connected to the media stream reproducing device is controlled to record the received media stream for later reproduction the power consumption of the media stream reproducing device is preferably also reduced, either directly as described above, or manually by a user, e.g. after being informed that the content will be recorded for later reproduction and that it is now safe to switch off the media stream reproducing device in order to save power. This particular case effectively saves power because receiving and recording typically consume much less power than outputting a media stream content on a display or through an amplifier.

The three cases discussed above can occur individually or in any combination. A combination of two or more of the three cases occur substantially simultaneous, or sequentially, separated by the measured mains supply voltage falling below a predefined second and/or third level or by a predetermined time delay, or a combination thereof. For example, first a message is output to a user, requesting the user to save energy, then, after a predetermined time period has expired, or after a further drop of the mains supply voltage, the power consumption of the media stream reproducing device is reduced, and ultimately the media stream is recorded and the power consumption of the media stream reproducing device is reduced. In any of the cases discussed above the reduction of the power consumption can be effected in one or more stages. For example, first the brightness of a display and/or the audio volume is reduced, or the display is switched off while the audio signal is still reproduced, and only in case a further reduction is required, recording of the media stream is begun with, and the media stream reproducing device is controlled to use even less power, e.g. by switching it off completely. However, the recording may also be started at the time of the first reduction taking effect. It is also conceivable to reduce the brightness and/or the audio volume continuously or in steps in accordance with the mains supply voltage level, before ultimately switching off the media stream reproduction. Various levels of power reduction can be connected to various levels of reduction of the mains supply voltage, and time periods to expire before entering the next level of power reduction can be connected with and vary with different mains supply voltage levels, and it will be apparent to the skilled person, in light of the present specification, how to combine the different timings and ways of power saving with different mains supply voltage levels.

It is noted that, while the power reduction is discussed herein mostly with reference to display brightness and/or audio volume, the power consumption of the media stream reproducing device can also be reduced by accordingly controlling and/or disabling other functions, e.g. a video content-dependent background illumination of a space surrounding the display, or a spatial and/or temporal resolution of video content. The latter may be less obvious, but performing graphics calculations for higher spatial and/or temporal video resolution inevitably consumes more power than doing the same for lower resolutions, or dispensing with any kind of graphics calculations such as scaling. Other functions that may be controlled by the present method for reducing the power consumption of the media stream reproducing device include reducing a number of auxiliary tasks performed by a microprocessor of the media stream reproducing device, or reducing a number of channels or stations received and processed by the media stream reproducing device. The tasks performed by the media stream reproducing device's microprocessor include, e.g., Internet applications, game applications, service processes or applications, which may run in the background or in the foreground, independent from the media stream or dependent thereof. The tasks to be stopped or interrupted for reducing power consumption may also include tasks for processing voice commands received via a microphone, or detection of gestures by a camera facing the user. The reduction of the channels or stations processed in parallel may include switching off or putting to standby all but one tuners of the media stream receiver connected to the media stream reproducing device. It is also conceivable to switch the reception of the media stream from a first source to a second source, wherein the second source may consume less power for providing a media stream of the same content but in a different format. The different format may have a lesser spatial and/or temporal resolution. As an example, it is possible to switch from a high definition stream received via satellite to a same-content lower definition stream received via a terrestrial antenna, wherein the terrestrial receiver consumes less energy. Alternatively, it is possible to switch from receiving a high definition stream to a different channel, or frequency, of the same transmission system that transmits the same content at a lower spatial and/or temporal resolution. It is readily apparent to the skilled person that any of the options for reducing the power consumption can be combined with any one or more other of the options presented in this specification.

In this context it is also conceivable to reproduce lower-resolution content using only a fraction of the display. This saves power in case a backlight using local dimming is provided in the media stream reproducing device. For example, a full HD screen having a resolution of 1920x1080 pixels that is equipped with local dimming could display a video image at a resolution of 720x625 pixels in one part of the screen without up-scaling it to the full screen size. The remaining part of the screen would remain unused and does not need backlighting, thereby saving energy. In addition, the energy required for upscaling is saved. Other video image sizes are of course conceivable in this context, and the way the local dimming is implemented in a specific TV set may determine where and at which size images are displayed on the screen.

In a development of the method, in addition to one or more of the actions discussed before, a message is sent to a server or other network entity when any of the actions in response to the mains supply voltage falling below a predetermined level has been initiated. The message indicates which action has been initiated, and one or more reasons for the action having been initiated or carried out. This aspect allows for a power grid operator or an operator of a large number of public displays to take notice of the operating conditions of the power grid or the public displays, and to initiate corrective measures. Public displays in this context include advertising displays in general public spaces as well as advertising displays in shopping malls, supermarkets, airports, and the like.

In another development of the method monitoring the mains supply voltage is continued while the power consumption of the media stream reproducing device is reduced. In case the mains supply voltage rises again and exceeds a predetermined level for a predetermined time period, the reduced power consumption mode is cancelled in response to a correspondingly generated control signal. The predetermined level for entering the reduced power consumption mode and for cancelling the reduced power consumption mode may be different, providing a hysteresis between the two modes and preventing rapid changes of the modes. The media stream reproducing device may simply go from the reduced power mode to the normal mode, i.e. an operating mode in which user settings fully govern the power consumption, or to a power mode that still has a power consumption higher than the reduced power consumption mode, but lower than in normal operation. It is also conceivable to extract a control signal for cancelling reduced power consumption mode the from the media stream, or receive such signal over a channel that is independent from the channel carrying the media stream, which signal ultimately controls changing the operating mode.
In the latter case the signal is received, e.g., over a LAN or wireless network connection, a text message or an email.

In one embodiment of the development the control signal controls selectively providing an output signal controlling the reduction of the power consumption of the media stream reproducing device to be cancelled. In another embodiment of the development the control signal controls a random delay to expire before providing an output signal controlling the reduction of the power consumption of the media stream reproducing device to be cancelled. The random delay may be generated in response to the control signal indicating the cancellation of the reduced power consumption mode. The random delay may likewise be generated when initially switching on the media stream reproducing device, or when entering a reduced power consumption mode, or may be set by the manufacturer, or the like. In case various levels of power reduction can be selected, see above, the control signal can cancel one or more of the various levels of power reduction, and each cancellation may take effect only after a random delay has expired, either a global random delay valid for all modes, or individual random delays for each mode. It is also possible to use a multiplicity of dedicated control signals, individual ones for cancelling each power reduction level. This development allows for non-simultaneously and in a time-distributed fashion, i.e. over a certain period of time, bringing a large number of media stream reproducing devices back to normal operation without causing a power surge that would be present if a large number of devices is switched on simultaneously.

In case the media stream reproducing device was switched off in response to a mains supply voltage falling below a predetermined level, and the media stream was recorded for later reproduction, when the mains supply voltage rises again and exceeds, for a predetermined time period, a level sufficient for operating the media stream reproducing device, the reproduction of the recorded media stream is begun in a reduced power consumption mode or in normal mode. Normal mode in the context of the present method and its developments and embodiments is a mode in which no power saving measures related to specific mains power voltage levels are enabled or initiated. Any power saving mode deliberately set by a user are considered normal operating mode.

In a development of the present method, when a power saving mode has deliberately been selected or set by a user, and the user issues a command to cancel the previously set power saving mode, the measured mains power supply voltage level is evaluated before the media stream reproducing device effectively cancels the previously selected power saving mode. Only when the mains power supply voltage level is higher than a predetermined value the cancelling command takes effect. Otherwise, a message will be displayed to the user, informing the user about the reason why the power saving mode cannot be cancelled at this time. It is noted that various power saving modes representing various levels of reduction of the power consumption of the media stream reproducing device can be present in a media stream reproducing device, which modes are tied to certain mains power supply voltage levels. When a user tries to cancel a power saving mode, but the user desires an operating mode that does not match a present mains power supply level, the device may switch to a mode that provides less power saving than before, yet does not correspond to the user-desired operating mode. This behavior of the media stream reproducing device may be termed a conditional partial cancellation of a power saving mode.

In another development of the present method a user can manually override the automatic, voltage level-depending power saving. In this development, individual ones or all power saving modes can be generally inhibited or cancelled after they had been initiated, in response to a corresponding user setting or user input.

In embodiments of the present method if the media stream reproducing device is equipped with a camera facing the viewer, viewer presence recognition is used for detecting if a user is actually viewing the media stream. If not, the media stream reproducing device can immediately switch to standby when a brownout is detected, and/or activate recording of the content depending on a user's settings.

In embodiments of the present method or its developments, while the power consumption of the media stream reproducing device is reduced, the media stream or a dedicated signal, e.g. transmitted on a channel that is independent from the channel carrying the media stream, is still received and monitored for emergency warnings or messages. Such warnings include weather warnings, e.g. in case a storm or a Tsunami approaches. In case an emergency warning or message is received the reduction of the power consumption of the media stream reproducing device is temporarily cancelled for reproducing the emergency warning or message, or the emergency warning or message is reproduced in a mode that still offers power reduction, but consumes more power than the previous power-reduced operating mode. The time of cancellation preferably is distributed across a plurality of media stream reproducing devices, for example in the manner described further above, by either controlling groups of devices to cancel the power saving mode or by controlling setting random times to expire before the media stream reproducing devices cancel the power saving mode.

In a development of the previous embodiments temporarily cancelling the reduction of the power consumption of the media stream reproducing device includes intermittently reproducing the emergency warnings or messages, e.g. in a flashing manner. In a development the message is accompanied by an acoustic alert signal. The times of intermittent reproduction are preferably distributed in a coordinated manner as described before.

In a development of the previous embodiments temporarily cancelling the reduction of the power consumption of the media stream reproducing device includes reproducing warnings using only a fraction of the display screen's total area. In case a TV set is equipped with local dimming backlight or is of an active light emitting type such as for example OLED this allows for further energy saving, since not the entire backlight needs to be switched on, or only the active portions in case of an OLED display.

In another development of the previous embodiments temporarily cancelling the reduction of the power consumption of the media stream reproducing device includes reproducing the warnings only through audio output. This development avoids using energy for producing an image on a display screen while still allowing reproduction of a warning message.

It is also possible to enable the previously described partial screen display when in audio-only mode, for reproducing the warning message through both audio and video.

It will be readily apparent to the skilled person that the various developments and embodiments for temporarily cancelling reduction of the power consumption of the media stream reproducing device can be combined and/or enabled depending on a required power saving level, the type of the warning message, and the like.

In embodiments of the present method and its developments the mains voltage is monitored and averaged over a predetermined period of time so as to avoid spurious changes such as spikes or sags to trigger any of the power saving measures.

Similarly, in embodiments of the present method and its developments, in a training mode the average normal mains power supply voltage at a location of the media stream reproducing device is determined and stored in a memory. This allows for taking different mains supply voltage levels into account for initiating the various power saving modes, which different mains supply voltage levels can occur even within the wiring of a residential power grid installation. The various power saving modes are then preferably initiated or triggered at mains supply voltage levels falling below a value set relative to the previously determined normal mains power supply voltage.

Such training mode is particularly useful for example in case a user moves from a location that has a nominal mains power supply voltage of 110 VAC to a location that has a nominal mains power supply voltage of 230 VAC.

A training mode may also be employed for preventing entering power save modes in response to brief drops in the power supply voltage, e.g. negative spikes resulting from other electrical appliances switching on, which may occur regularly or spuriously at any time or during certain times of the day. For example, if a nearby factory uses large electrical machines such machines could produce brief drops of the supply voltage during normal working hours, but rarely at night. The same can happen if a high power electrical appliance is started within the same house, e.g. a water boiler, or an air conditioning system. Such properties of the network do not indicate a brownout, rather a temporal sagging or droop due to high currents on the line, and could be ignored.

It is also possible to automatically trigger the training mode when scanning for TV or radio stations, which is considered an indication for a change of the location, or when none of the previously stored TV or radio stations can be received any more. Other indications can be used in this context, e.g. a significant change in the data rate of a broadband connection for a predetermined period, or the like.

The present method, its developments and embodiments may be implemented in a device including a media stream receiver, a microprocessor, a first memory for transitorily storing data and/or software instructions of a program executed by the microprocessor and a second memory for non-transitorily storing software instructions for execution by the microprocessor. The software instructions include, inter alia, instructions effectively coding the present method, its developments and embodiments. The media stream receiver is adapted to receive a media stream, e.g. over one or more of digital broadband signals, terrestrial, cable or satellite radio or television broadcast signals, GSM, UMTS, LTE connections, or in accordance with any other media stream transport mentioned in this specification. The device provides an output signal representative of the received media stream. The signal is typically output essentially while receiving, i.e. without intermediate storage of the output signal or the media stream except as necessary for processing. The device further includes a meter for measuring a mains supply voltage and a non-volatile storage adapted to selectively store the received media stream. When executing the software instructions the device is configured to perform any one or more of the present method, its developments and embodiments as described in this specification.

In case the device includes a display and/or an audio amplifier coupled to one or more loudspeakers the output signal corresponds to images and sound representing the content of the received media stream. A message that is output when performing the method is one or more of a visual message comprising text and/or symbols, or an audible message, including signal tones and/or voice output.

In case the device does not include a display and/or an audio amplifier coupled to one or more loudspeakers the output signal corresponds to one or more of an electrical, electro-magnetic or optical signal for coupling to a display device and/or an audio amplifier. The signals can be present in analog and/or digital form in accordance with one or more of the signal formats mentioned in this specification.

The signal coupled to the display and/or the audio amplifier can carry control signals for controlling power saving modes of the display and/or the audio amplifier along with the signal representing the media stream, e.g. in a multiplexed manner. However, it is also possible to carry the control signals on a separate connection. This is for example done in case the signal is a digital signal, which comprises a number of separate logical connections, including one for the media stream content and one for the control signals. Such separate logical connections can, however, also be present in analog signals, for example by using different frequencies for individual sub-signals.

The present method enables the user to select between a controlled automatic reduction in accordance with embodiments of the method and a complete, uncontrolled shut off due to the brownout becoming a blackout as a result of overloaded mains supply grid. By an additional menu item provided in the media stream reproducing device the responsible user can select between a normal power saving procedure or a more restrictive one.

It is to be noted that one or more of the various developments and embodiments of the method described hereinbefore can be combined in multiple ways, and description of the various combinations is omitted in this specification only for reasons of conciseness and clarity.

### Brief description of the drawings

The present method, its developments and embodiments, as well as exemplary apparatuses implementing aspects of the method, embodiments and developments thereof, will be described in the following with reference to the drawing, in which
- Fig. 1: shows a basic exemplary block diagram of a media stream receiver having a display suitable for implementing the present method;
- Fig. 2a: shows a first exemplary power supply with a primary side voltage supervisor circuit suitable for use in accordance with the present method;
- Fig. 2b: shows a second exemplary power supply with a primary side voltage supervisor circuit suitable for use in accordance with the present method;
- Fig. 3: shows a further exemplary power supply with a primary side voltage supervisor circuit suitable for use in accordance with the present method;
- Fig. 4: shows an exemplary graphic representation of various mains power supply voltages and respective actions taken for reducing the power consumption;
- Fig. 5: shows exemplary screen content including messages displayed on the screen in accordance with the present method;
- Fig. 6: exemplarily shows the power consumption of an exemplary TV set for various mains supply voltage levels;
- Fig. 6b: exemplarily shows the power consumption of an exemplary TV set for various mains supply voltage levels in accordance with an embodiment of the present method;
- Fig. 7: shows an exemplary power consumption profile for an exemplary TV set with voltage hysteresis between enabling and cancelling power consumption reduction modes;
- Fig. 8: exemplarily shows the mains supply voltage and mode switching of an exemplary media stream reproducing device in accordance with the present method over time for an exemplary brown-out event; and
- Fig. 9: shows a basic exemplary flow diagram of the present method.

In the figures, identical or similar elements are referenced using the same reference numerals or reference symbols.

### Detailed description of embodiments

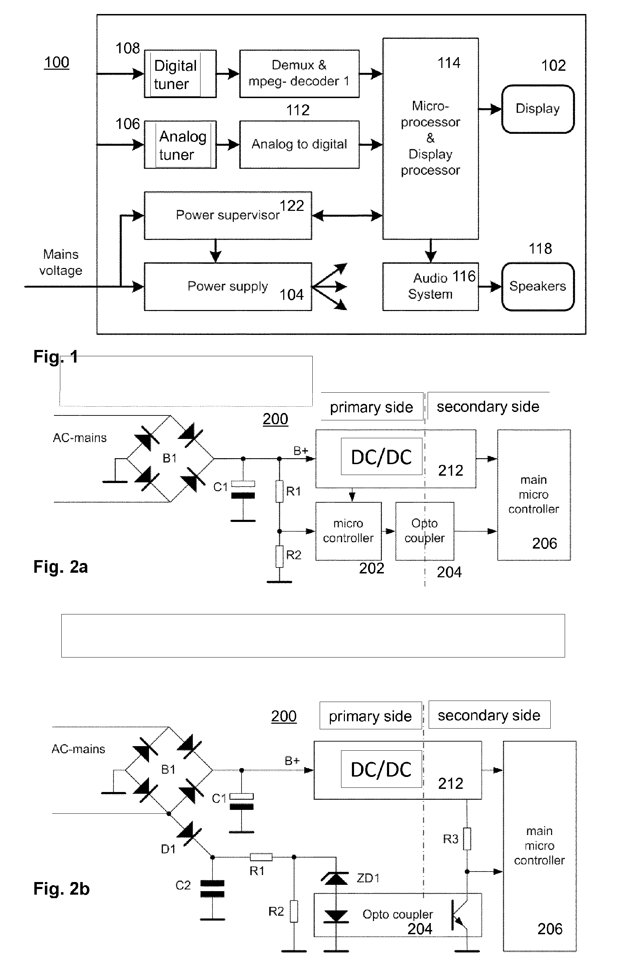

Figure 1 shows a basic, exemplary block diagram of a media stream receiver 100 having a display 102 suitable for implementing the present method or one or more embodiments and/or developments thereof. Media stream receiver 100 includes a power supply 104, analog and digital tuners 106, 108 and their respective signal processing 112, e.g. demodulation, demultiplexing and/or decoding. Decoding in this exemplary embodiment is performed in accordance with one of the MPEG standards. Once demodulated, demultiplexed and/or decoded the received signal is subjected to further signal processing 114, e.g. in a digital signal processor under control of a microprocessor. The processed signal is fed to display 102 and/or to an audio system 116, for outputting an image on display 102 and sound through loudspeakers 118. Media stream receiver 100 further includes a power supervisor 122 for detecting a brownout condition on the power supply line.

Figure 2a shows a first exemplary power supply circuit 200 with a primary side voltage supervisor circuit having a primary side microcontroller 202. Microcontroller 202 samples input voltage B+ present on input capacitor C1 downstream of bridge rectifier B1. Resistors R1 and R2 divide input voltage B+ to a level suitable for an A/D-converter input (not shown) of primary side micro controller 202. The sampled value is transferred to a secondary side of power supply 200 by optocoupler 204 and is fed to main microprocessor 206. Main microprocessor 206 runs software instructions for evaluating the transferred value and for taking actions in dependence of the value. The actual conversion from the mains voltage into the secondary voltage or voltages is provided by converter 212.

Fig. 2b shows a second exemplary power supply circuit 200 with a primary side voltage supervisor circuit. This exemplary circuit uses an additional rectifier D1 and a capacitor C2 for sampling the input voltage. Capacitor C2 has a much lower capacitance than capacitor C1 and allows for a more accurate measurement with a faster response. The voltage across capacitor C2 follows the input voltage much faster than B+ on capacitor C1 which has a larger capacitance. As in the exemplary circuit of figure 2a the voltage is divided by resistive divider comprising resistors R1, R2. The voltage across resistor R2 is tapped off by a series-connection of Zener diode ZD1 and a forward-biased diode of optocoupler 204. Resistor R1 limits the current through the series-connection. Whenever the voltage across resistor R2 is larger than the Zener voltage of Zener diode ZD1 plus the forward voltage of the optocoupler's diode a signal corresponding to the current through the series-connection is transferred to the secondary side by optocoupler 204. An output transistor of the optocoupler 204 translates the signal into a current from a secondary-side supply voltage through resistor R3 to ground. The current causes a voltage drop across resistor R3, which is sampled by an AD-converter (not shown) of main microcontroller 206. Like in figure 2a the actual conversion from the mains voltage into the secondary voltage or voltages is provided by converter 212.

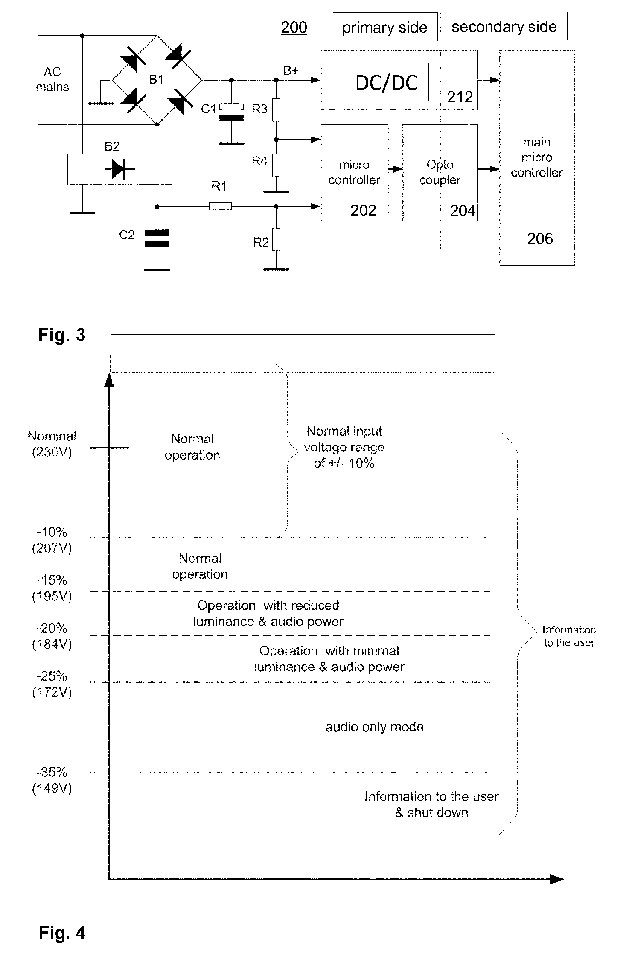

Fig. 3 shows a further exemplary power supply circuit 200 with a primary side voltage supervisor circuit that is a combination of the circuits of figures 2a and 2b. Like in figure 2a the voltage B+ across capacitor C1 is fed to microcontroller 202 via a resistive divider comprising resistors R3 and R4. In addition, a rectifier B2 rectifies the mains voltage and supplies the rectified mains voltage to capacitor C2, which has a smaller capacitance than capacitor C1. As mentioned further above, the mains voltage is typically constant over long time period but can have spikes and sags of relative short duration. Disturbances within a cycle of the mains AC voltage are filtered by the capacitor C1 and are not considered a brown-out. However, rectifier B2 and capacitor C2 are designed to be able to measure the momentary AC mains voltage, and to provide a corresponding value to microcontroller 202 via a resistive divider comprising resistors R1 and R2. In this exemplary power supply the momentary AC mains voltage and B+ are effectively measured. The voltage value measured at C2 is a representation of the momentary mains voltage, which can be used for a quick reaction of the system to beginning anomalies of the AC voltage, and the voltage at C1 represents the voltage available for the power supply for the next few seconds. Microcontroller 202 controls optocoupler 204 to transfer a signal representative of the mains power supply condition to main microcontroller 206, which eventually initiates one or more power consumption reduction measures as appropriate. Like in figure 2a and 2b the actual conversion from the mains voltage into the secondary voltage or voltages is provided by converter 212.

As discussed further above the energy saving concept implemented by the present method may have different reaction times for different energy saving measures. An automatic detection of a brown out must be capable of distinguishing between different stages of a brown out.

For avoiding a complete blackout a quick reaction, e.g. by entering a first level of power saving, is advantageous. Such quick immediate power saving by e.g. 10 million TV sets, or generally media stream reproducing devices, each reducing the power consumption by e.g. 50 W within a few milliseconds would reduce the load on the mains power grid by 500 MW, allowing for the grid to stabilize and recover.

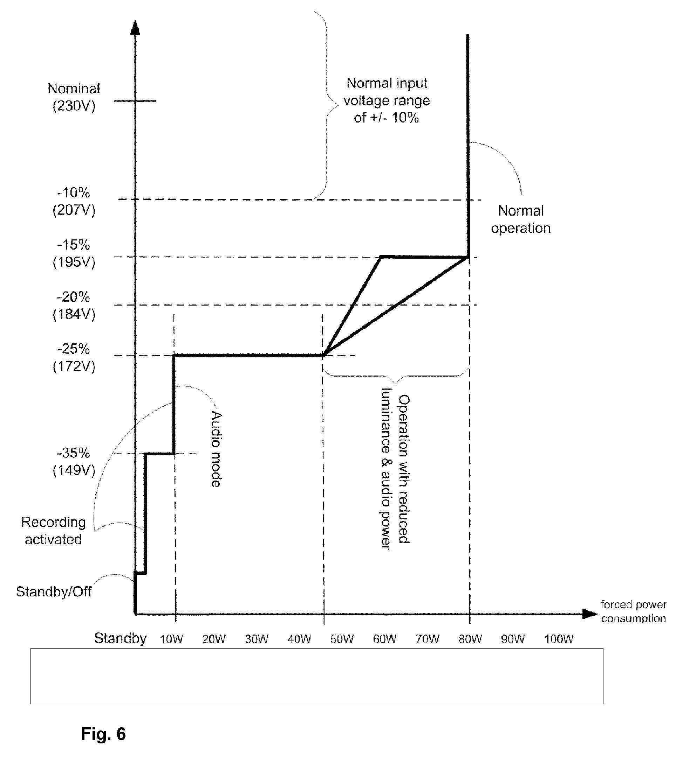

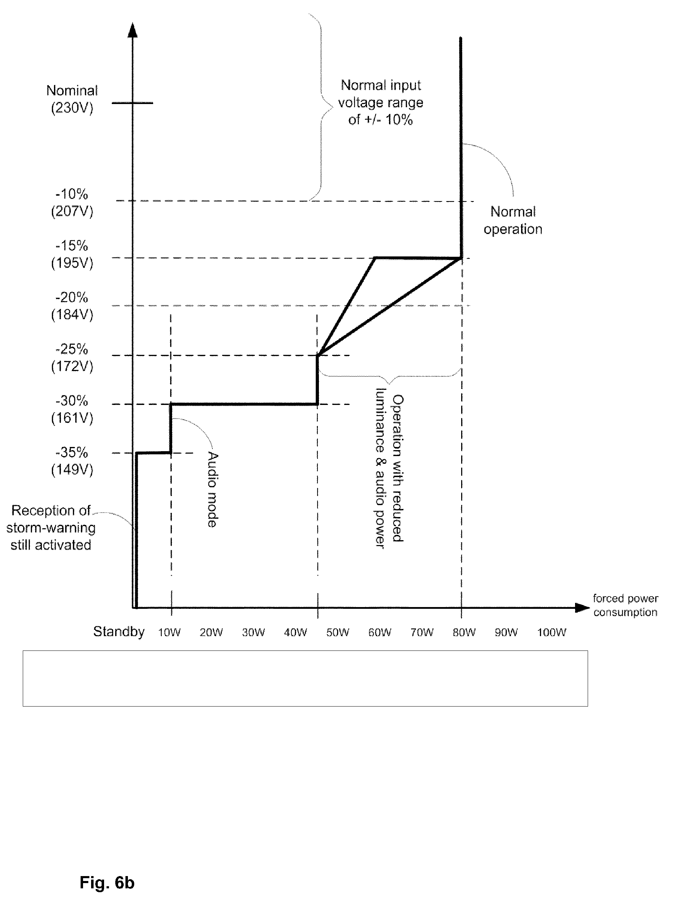

If such quick energy saving, without really losing the ability of comfortably watching TV, was not sufficient a further power reduction by gradually further reducing the power consumption begins. As the brown-out progresses further, further steps of power saving are triggered, as will be discussed in detail below with reference to figures 6 and 6b.

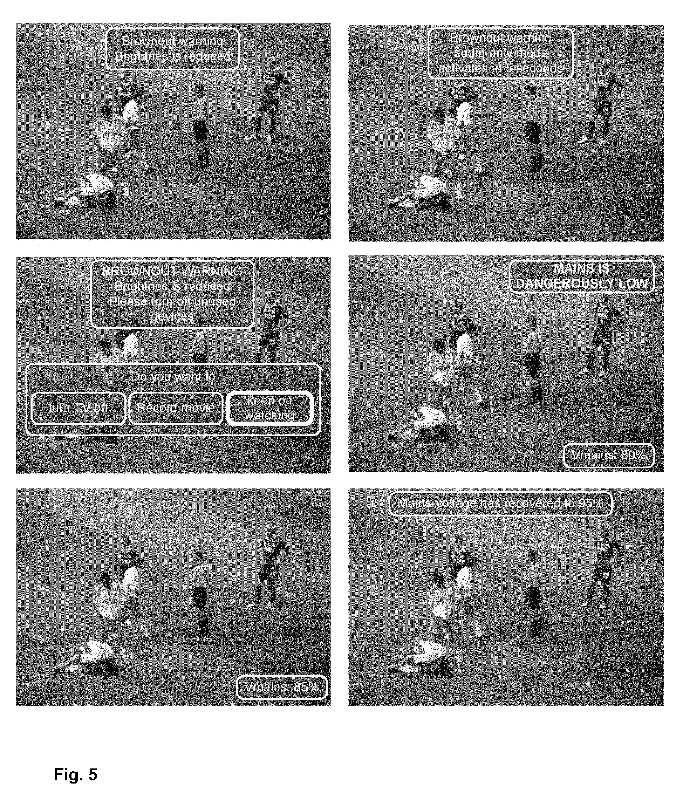

Dramatic steps are only accepted by the user if he/she receives clear information about the actions taken and the reasons, as will be discussed in detail below with reference to figure 5. The information may comprise one or more of a simple voltage level displayed, a brown-out warning by text or speech output, information about precautions taken or planned by the TV-system, and a text or spoken guideline for further useful contributions in response to the power shortage.

Figure 4 shows an exemplary graphic representation of various mains power supply voltages and respective actions taken for reducing the power consumption. At nominal level, 230 V in this example, the media stream reproducing device operates normally, i.e. brightness, picture improvements and audio volume are reproduced as set by the user. The normal operation mode is valid within the upper and lower tolerances of the nominal mains power voltage. In the example of figure 4 the normal operation is maintained even at a voltage level that is 15% lower than the nominal mains voltage level. In a mains voltage level range between 85% and 80% of the nominal mains voltage level a first power reduction mode is enabled. In this example the luminance, i.e. the display brightness, and the audio volume are reduced. In a mains voltage level range between 80% and 75% of the nominal mains voltage level a second power reduction mode is enabled. In this example the display brightness and the audio level are set to a minimum value the media stream reproducing device is capable of. In case the mains voltage is within a range of 75% and 65% of the nominal mains voltage level a third power reduction mode is enabled. In this example the media stream reproducing device will reproduce only the audio of the media stream. If the mains voltage level falls below 65% of the nominal mains voltage level an indication is provided to the user and the device is subsequently shut down.

In embodiments of the present method whenever a new power saving level is enabled corresponding information is provided to the user, e.g. via the display or any other suitable indicator. Such information may include information about the actual input voltage level and the respective power saving level. As discussed further above, as soon as the voltage level recovers, the media stream reproducing device will enable a power saving mode involving a smaller reduction of the power consumption. A hysteresis and/or a delay function may be provided for suppressing quick toggling between two modes.

The reduction in power consumption when reducing only the audio volume is comparatively small when compared to the possible reduction when changing picture settings such as brightness. Changing audio settings will allow for a reduction in the range of 3-10W. Most of the power is consumed by a subwoofer speaker, if provided. Hence, turning off the subwoofer only, for power saving is a conceivable option.

A typical 60 inch LCD-TV consumes, at minimum brightness, around 45W, while still producing a clearly visible image, and up to 150W at the highest brightness. Normal power consumption is about 90W. Operating the same TV in an audio-only mode, i.e. backlight completely turned off, will consume around 25W. The remaining power is mostly due to receiver and other processing blocks still being powered. A sophisticated design will allow the power consumption in the audio only mode to be reduced to around 10W by inactivating all unnecessary picture processing blocks.

Table 1 provides an exemplary overview over various levels of power consumption and savings for various power saving modes enabled at different mains voltage levels.

| Table 1, exemplary power savings | | | | |
|---|---|---|---|---|
| Input voltage (nominal 230V) | Mode-level | action | Power consumption | Power saving (nominal 90W) |
| 100 - 85% | 0 | Normal TV | 90W | 0 |
| 85 - 80% | 1 | reduced background illumination | 60 | 30W |
| 80 - 75% | 2 | Minimum background illumination, no graphical effects | 45W | 45W |
| 75 - 65% | 3 | Audio mode / emergency services | 5-10W | 80-85W |
| below 50% | 4 | TV off (Standby) | <1W | 89W |

In an embodiment the present method provides information about the brownout to the viewer via the display screen. The information may be present permanently or for a limited time when a transition to a different power saving mode takes place.

Figure 5 shows exemplary screen content including messages displayed on the screen, e.g. using an on-screen-display module, or OSD module, provided in the media stream reproducing device. The messages inform the user about a beginning or present brownout. Some messages may provide text information about the measures initiated or soon to be initiated by the media reproducing device for reducing the power consumption. E.g., the message may inform about reduced brightness or audio only mode. Likewise, the message may include additional information such as current mains supply voltage level, either in Volts or as a percentage of the nominal voltage, e.g. 'mains is at 85%'. Also, the message could ask the user to take other actions in order to reduce the household's power consumption in the household, e.g. 'Please turn off unused devices'.

The message may also be accompanied by a selection menu offering power reduction actions for the media stream reproducing device. For example, the exemplary screen shot in the middle image of the left column in figure 5 displays a choice for the user to turn the TV off, to record the present movie or to keep watching TV, though possibly at a reduced brightness.

As previously discussed the power reduction is not limited to a single step. A typical TV set will work, without any restrictions, down to 85% of the nominal input voltage and only then gradually reduce the power consumption by enabling one or more of the above mentioned power consumption reduction measures. It may be advantageous to reduce, in a first step, the power consumption to an acceptable level, e.g. level 1 of Table 1, only to be followed by a gradual further lowering of the power consumption, eventually arriving at an operating mode that represents the lowest power consumption that still allows for watching TV. Further reduction modes, including an audio only mode discussed further above will be enabled if the mains supply voltage drops further. Figure 6 exemplarily shows the power consumption of an exemplary TV set for various mains supply voltage levels. It is to be noted that the curves may include some hysteresis and/or delay between entering a power reduction mode and cancelling such mode, returning to a higher power mode. Delays provided for enabling power reduction modes may be in the range of seconds, and delays for returning to a higher power mode or normal operation may be about 10-1000 times longer. The delays may be different for different severities and durations of a brown out. In figure 6 the lowest power consumption that is not standby is provided by a recording mode, assuming that a recording device consumes less power than a display or an audio reproduction of the streamed media content.

Figure 6b shows a similar power consumption profile for various mains supply levels for an exemplary TV set as figure 6. However, when in standby a receiver of the media stream reproducing device remains on for receiving weather alerts, e.g. storm warnings as provided by the US NOAA.

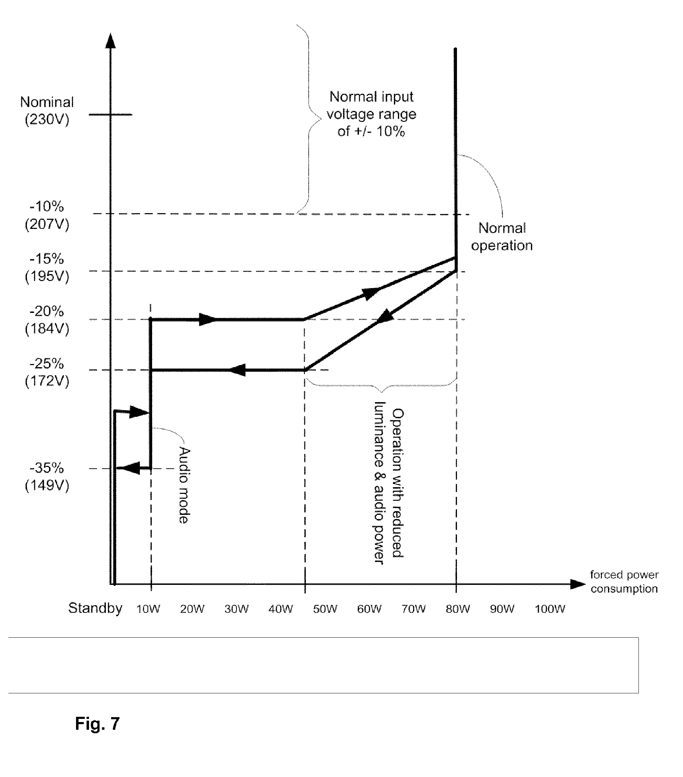

Figure 7 shows an exemplary power consumption profile for an exemplary TV set with voltage hysteresis between enabling and cancelling power consumption reduction modes. The arrows indicate the course of actions taken with the variation of the mains supply voltage.

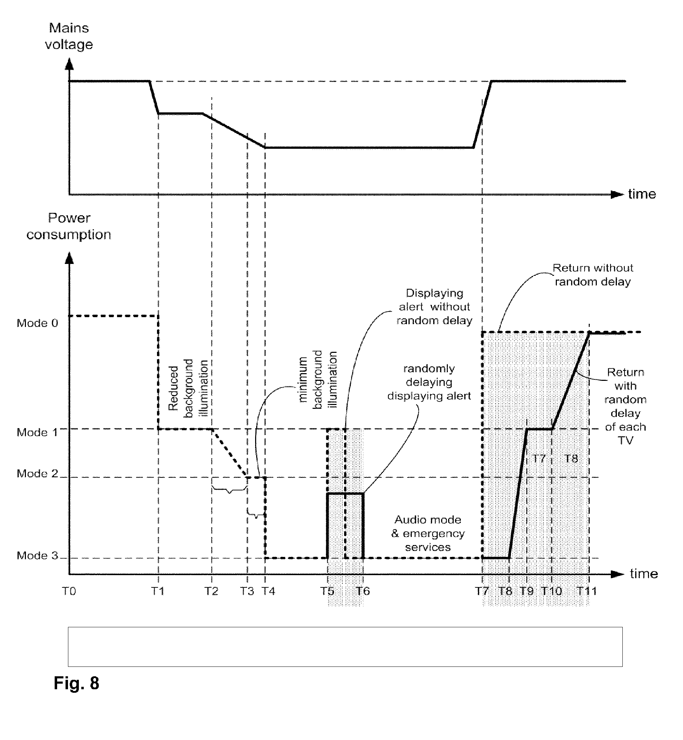

Figure 8 exemplarily shows the mains supply voltage and mode switching of an exemplary media stream reproducing device in accordance with the present method over time for an exemplary brown-out event. From T0 to T1 the mains supply voltage is nominal, or within the corresponding tolerances, and the media stream reproducing device is in normal operation mode. In between T1 and T2 the mains supply voltage drops significantly due to a brown-out. An immediate reaction of the attached media stream reproducing device is switching to a lower power mode, e.g. resulting in a power consumption reduction of 50%. Between T2 and T3 the mains supply voltage drops further and the media stream reproducing device gradually further reduces the power consumption to minimum power consumption, e.g. with backlight set to minimum when reaching T3. However, between T3 and T4 the mains supply voltage continues to fall but the backlight illumination or brightness cannot be reduced any further. Thus, the further drop of the mains supply voltage between T4 and T5 below a predetermined value triggers the next power reduction step, e.g. turning off the display and operation in audio-only mode. In this mode audio-visual content is played only via the speakers and, depending on the capabilities of the media stream reproducing device, is recorded for later viewing. At T5 a weather alert appears, e.g. transmitted via auxiliary data in the media transport stream. This alert must be displayed for security reasons. Thus, between T5 and T6, without the distributed wakeup feature of the present method, invention all media stream reproducing devices would immediately switch to a higher power level, for indicating the warning to the users. However, using one embodiment of the distributed wakeup feature of the present method, wakeup of individual media stream reproducing devices is delayed by different time periods, and the media stream reproducing devices are turned on in a time-distributed fashion such that a surge power-peak is considerably reduced. In an alternative embodiment a randomly delayed indicator signal is provided to different, individual media stream reproducing devices, and each media stream reproducing device will turn on for a short time period, reproducing the message, but not all of the devices will turn on at the same time.

The power consumption for time intervals T5 to T9 is not represented for a single media stream reproducing device. Rather, two alternatives are shown. The solid line indicates the accumulated power consumption using the distributed wakeup feature of the present method. The dotted line indicates the accumulated power consumption without using the distributed wakeup feature of the present method. The patterned background depicts the range of a random time period for each single media stream reproducing device to turn on or for cancelling a power reduction mode.

From T6 to T7 the mains supply voltage remains below a predetermined value and the media stream reproducing devices remain in the low power consumption mode entered before, e.g. audio-only mode or standby.

At T7 the mains supply voltage returns to nominal value, either gradually or in a step-like manner. At this time period the media stream reproducing devices shall return to normal operation. The dotted line shows a steep increase in the total power consumption that results from all media stream reproducing devices returning to normal operation essentially simultaneously, which could result in overloading the grid, possibly triggering a new brown-out. However, T7 to T11 is also a time period during which individual media stream reproducing devices return to normal operation or to an operation mode with less reduced power consumption than before in a time distributed manner. Thus, in accordance with the present invention, from T7 to T8 a random delay similar to the interval T5-T6 is used for avoiding all media stream reproducing devices turning on at the same time. In the time interval T8 to T9 a slow rise of the overall power consumption is shown. This slow rise is the sum of all media stream reproducing devices turning to normal operation at randomly different times. In a development of the present method, in the time interval between T9and T10 the media stream reproducing devices are kept at an average illuminating level for another random time period, allowing for the mains power grid to further stabilize. During this interval the user can watch media streams without major restrictions. Then, in the time interval from T10 to T11 the media stream reproducing devices return to individual, normal operating conditions, each after a third random time period has expired.

It is to be noted that the time intervals T7 to T11 are not necessarily four independent random time intervals. A single time period T7 to T11 is likewise conceivable for solving the return-from-power-reduction problem, e.g. by providing different distribution functions for the switching-on of different functionalities in different individual media stream reproducing devices.

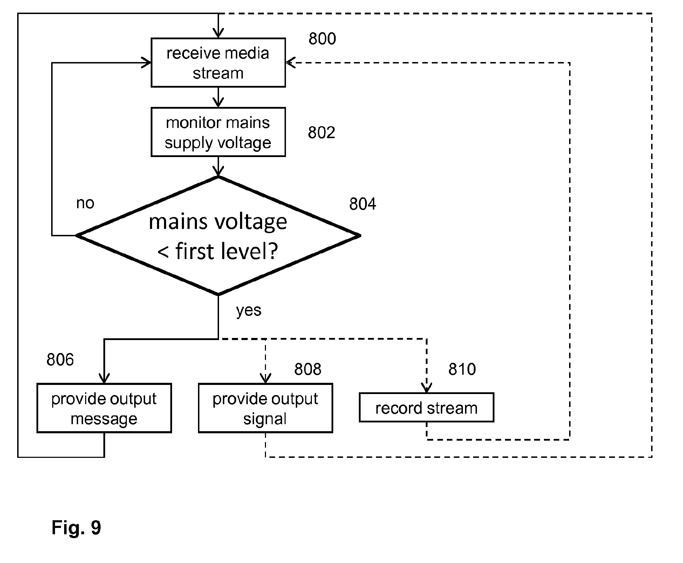

Figure 9 shows a basic exemplary flow diagram of the present method. At step 800 the media stream is received. At step 802 the mains supply voltage is detected. When the mains supply voltage remains above a first level, no-branch of decision step 804, the receiving and monitoring is continued in a normal manner. When the mains supply is below the first level, yes-branch of decision step 804, a message is output to the user, step 806, and receiving and monitoring is continued. Alternatively or in addition, step 808, a signal is output for controlling the media stream reproduction device in accordance with one or more embodiments or developments of the method described in this specification, and receiving and monitoring is continued. Yet alternatively or in addition, step 810, the received media stream is recorded, and receiving and monitoring is continued. For simplicity reasons various voltage levels for triggering individual ones of the power reduction measures are not shown in the figure. Likewise, time delays or averaging of measurements are not shown. However, these variations are easily implemented in basic structure of the method as presented herein and form part of embodiments or developments of the present method.

## Claims

1. A method of controlling a power consumption of a media stream reproducing device having a wide input voltage range power supply, the method including:
- receiving, at an input of a media stream receiver, a media stream and providing an output signal representative of the received media stream;
- monitoring, in a monitoring circuit, a mains supply voltage of the media stream receiver;
wherein, in case the measured mains supply voltage falls below a predetermined first level the method further includes one or more of:
- providing an output signal representative of a message indicating the reduced mains supply voltage and/or advising a user to reduce the power consumption of at least the media stream reproducing device, or providing an output signal controlling a first reduction of the power consumption of the media stream reproducing device, or controlling a recording device operatively connected to the media stream reproducing device to record the received media stream for later reproduction.

2. The method of claim 1, wherein two or more of the actions performed in response to the measured mains supply voltage falling below the predetermined first level are carried out sequentially, separated by the measured mains supply voltage falling below a predefined second and/or third level or by a predetermined time delay, or a combination thereof.

3. The method of claim 1 or 2, wherein the first reduction of the power consumption includes switching off of the media stream reproducing device, or putting the media stream reproducing device into a standby mode, or reducing the brightness and/or audio volume of the media stream reproducing device, or a spatial and/or temporal resolution of video content, or reducing a number of auxiliary tasks performed by a microprocessor of the media stream reproducing device, or reducing a number of channels or stations received and processed by the media stream reproducing device, or a combination thereof.

4. The method of one of claims 1 to 3, further including sending a message to a server when or after any one or more of the actions in response to the measured mains supply voltage falling below a predetermined first level has been initiated, the message indicating why and which action has been initiated or carried out.

5. The method of one of claims 1 to 4, further including, while the power consumption of the media stream reproducing device is reduced, continuing monitoring the mains supply voltage, and, in case the mains supply voltage exceeds a predetermined fourth level for a predetermined first time period, extracting a control signal from the media stream, or receiving a control signal over a channel that is independent from the channel carrying the media stream, wherein the control signal controls selectively providing an output signal controlling the first reduction of the power consumption of the media stream reproducing device to be cancelled, or wherein the control signal controls determining a random delay to expire before providing an output signal controlling the first reduction of the power consumption of the media stream reproducing device to be cancelled.

6. The method of claim 5, wherein, when the recording device was controlled to record the received media stream and the media stream reproducing device was switched off, and further when the mains supply voltage exceeds a fifth level, cancelling first reduction of the power consumption of the media stream reproducing device includes providing the recorded media stream to the media stream reproducing device and operating the media stream reproducing device at a reduced power consumption or in an operating mode not involving a reduced power consumption.

7. The method of one of claims 1 to 4, further including, while the power consumption of the media stream reproducing device is reduced, monitoring the media stream or a channel that is independent from the channel carrying the media stream for emergency warnings or messages, and temporarily cancelling or reducing the reduction of the power consumption of the media stream reproducing device for reproducing the emergency warning or message.

8. The method of claim 7, wherein temporarily cancelling or reducing the reduction of the power consumption of the media stream reproducing device includes intermittently cancelling or reducing the reduction of the power consumption of the media stream reproducing device while reproducing the emergency warnings or messages.

9. The method of any one of the preceding claims, wherein providing an output signal controlling a first reduction of the power consumption of the media stream reproducing device comprises issuing a digital control signal to the media stream reproducing device, the digital control signal including, but not limited to a digital text message, an HDMI CEC command, or an email.

10. The method of any one of the preceding claims, including receiving the media stream over one or more of a digital broadband connection, cable, terrestrial or satellite radio or television broadcast, GSM, UMTS, LTE.

11. The method of claim 10, wherein reducing the power consumption of the media stream reproducing device includes changing reception of a currently received media stream from a first source to a second source.

12. The method of any one of the preceding claims, including, when or after any one or more of the actions in response to the measured mains supply voltage falling below a predetermined first level has been initiated, inhibiting or cancelling the action in response to receiving a corresponding user input.

13. A device including a receiver, a microprocessor, a first memory for transitorily storing data and/or software instructions of a program executed by the microprocessor, a second memory for non-transitorily storing software instructions for execution by the microprocessor, the device being adapted to receive a media stream and to provide an output signal representative of the received media stream while receiving, wherein the device further includes a meter for measuring a mains supply voltage and a non-volatile storage adapted to selectively store the received media stream, wherein the device, when executing the software instructions, is configured to perform the method of any one of claims 1 to 12.

14. The device of claim 13, wherein the receiver is adapted to receive the media stream over one or more of digital broadband signals, terrestrial, cable or satellite radio or television broadcast signals, GSM, UMTS, or LTE connections.

15. The device of claim 13 or 14, wherein the output signal is a visible image and/or an audio signal for reproduction on a display and/or a loudspeaker, or an electrical, electro-magnetic or optical signal for coupling to a display device and/or an audio amplifier.
